# EUROPEAN PATENT SPECIFICATION

(11) **EP 2 915 915 B1**
(45) Date of publication and mention of the grant of the patent: **23.08.2017**
(21) Application number: 15156721.1
(22) Date of filing: 26.02.2015
(51) Int. Cl.: D06F 58/20

(54) **LAUNDRY TREATMENT APPARATUS**
WÄSCHEBEHANDLUNGSVORRICHTUNG
APPAREIL DE TRAITEMENT DU LINGE

(30) Priority: 06.03.2014 KR 20140026455
(43) Date of publication of application: 09.09.2015
(73) Proprietor: LG Electronics Inc., Seoul, 07336 (KR)
(72) Inventor: Kim, Taewan, 153-802 Seoul (KR); Doh, Youngjin, 153-802 Seoul (KR); Lee, Jaekeun, 153-802 Seoul (KR); Kwon, Younghwan, 153-802 Seoul (KR)
(74) Representative: Ter Meer Steinmeister & Partner

(56) References cited:
- EP-A1- 2 449 163
- US-A1- 2007 101 602

## Description

This application claims the benefit of Korean Patent Application No. 10-2014-0026455, filed on March 6, 2014.

### BACKGROUND OF THE INVENTION

### Field of the Invention

The present invention relates to laundry treatment apparatuses.

### Discussion of the Related Art

A laundry treatment apparatus is a generic term for apparatuses having a washing function and/or a drying function of laundry (an object to be washed) and examples of the laundry treatment apparatus include a washing machine, a drying machine, and a combined washing and drying machine.

Laundry treatment apparatuses capable of drying laundry may be classified into those having an exhaust drying system and those having a circulation (condensation) drying system according to the flow of heated air (hot air) to be supplied to laundry.

A circulation drying system is configured to remove moisture from air discharged from a laundry receiving unit (i.e. to dehumidify the air), to heat the dehumidified air, and to resupply the dehumidified and heated air to the laundry receiving unit. An exhaust drying system is configured to supply heated air to a laundry receiving unit and to outwardly discharge the air discharged from the laundry receiving unit rather than resupply-ing the air to the laundry receiving unit.

Most conventional circulation drying systems require a dehumidifier to cool air discharged from the laundry receiving unit so as to remove moisture from the air as well as a heater to heat the dehumidified air. US 2007/0101602 A1 relates to a drum washing machine and a clothes-dryer equipped with a thermoelectric module. The thermoelectric module includes a heat absorption side and a heat dissipation side which absorbs and dissipates heat at a junction between two-dissimilar metals depending on direction of current flow through the junction. The heat absorption side is disposed at a hot air flowing passage.

### SUMMARY OF THE INVENTION

Accordingly, the present invention is directed to laundry treatment apparatuses that substantially obviate one or more problems due to limitations and disadvantages of the related art.

One object of the present invention is to provide a laundry treatment apparatus having high drying efficiency.

Another object of the present invention is to provide a laundry treatment apparatus in which a device to remove moisture from air and a device to heat the air are integrated.

Additional advantages, objects, and features will be set forth in part in the description which follows and in part will become apparent to those having ordinary skill in the art upon examination of the following or may be learned from practice. The objectives and other advantages may be realized and attained by the structure particularly pointed out in the written description and claims hereof as well as the appended drawings. The object is solved by the features of the independent claim.

Preferably, a laundry treatment apparatus includes a laundry receiving unit configured to provide a space for receiving laundry, a duct configured to supply air to the laundry receiving unit, a first heat exchanger configured to exchange heat with air introduced into the duct, a second heat exchanger located in the duct and configured to exchange heat with air having passed through the first heat exchanger, a heat transfer unit including a first conductor coming into contact with the first heat exchanger and connected to a positive electrode of a direct current (DC) power source, a second conductor coming into contact with the first heat exchanger and connected to a negative electrode of the DC power source, the second conductor being separated from the first conductor, a third conductor coming into contact with the second heat exchanger, a P-type semiconductor configured to interconnect the first conductor and the third conductor, and an N-type semiconductor configured to interconnect the second conductor and the third conductor.

The duct may include an exhaust duct configured to discharge the interior air of the laundry receiving unit to the outside of the laundry receiving unit and a supply duct to guide outside air to the laundry receiving unit, and the first heat exchanger, the second heat exchanger, and the heat transfer unit may be located inside the supply duct.

The laundry receiving unit may include a tub placed inside a cabinet and having an inlet port and an outlet port in communication with the outside, and a drum placed inside the tub to provide a laundry receiving space, and the duct may be configured to connect the outlet port and the inlet port to each other.

The first heat exchanger may include a heat absorption body located inside the duct, the first conductor and the second conductor being secured to the heat absorption body, and heat absorption fins protruding from the heat absorption body, and the second heat exchanger may include a heat radiation body spaced apart from the first heat exchanger in the longitudinal direction of the duct, the third conductor being secured to the heat radiation body, and heat radiation fins protruding from the heat radiation body.

The heat absorption fins and the heat radiation fins may be arranged parallel to a movement direction of air moving to the inlet port.

The heat absorption fins may include a plurality of conductive plates spaced apart from one another by a prescribed distance, and the heat radiation fins may include a plurality of conductive plates spaced apart from one another by a prescribed distance, one heat radiation fin being located in a space between one heat absorption fin and another heat absorption fin so as to be parallel to the heat absorption fins.

The heat absorption fins may protrude from the heat absorption body toward a lower surface of the cross section of the duct, and the heat radiation fins may protrude from the heat radiation body toward the lower surface of the cross section of the duct.

The first heat exchanger may include a heat absorption body located inside the duct, heat absorption fins protruding from the heat absorption body to a lower surface of the cross section of the duct, and an extension boy extending from the heat absorption body in the longitudinal direction of the duct, the first conductor and the second conductor being secured to the extension body, and the second heat exchanger may include a heat radiation body located below the extension body, the third conductor being secured to the heat radiation body, and heat radiation fins protruding from the heat radiation body toward the lower surface of the cross section of the duct.

The laundry treatment apparatus may further include a heater located inside the duct to heat air having passed through the second heat exchanger.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:
FIG. 1 illustrates an exemplary laundry treatment apparatus according to the present invention;
FIG. 2 illustrates an exemplary heat exchange module included in the laundry treatment apparatus according to the present invention; and
FIG. 3 illustrates another embodiment of the heat exchange module included in the laundry treatment apparatus according to the present invention.

### DETAILED DESCRIPTION OF THE INVENTION

Hereinafter, exemplary embodiments of the present invention will be described in detail with reference to the accompanying drawings. A configuration or control method of an apparatus that will be described below is intended to illustrate the embodiments of the present invention and not intended to limit the scope of the present invention. The same reference numerals used throughout the specification designate the same constituent elements.

A laundry treatment apparatus 100 of the present invention includes a cabinet 1 defining the external appearance of the apparatus 100, a laundry receiving unit placed inside the cabinet 1 to provide a space in which laundry (i.e. washing object or drying object) is received, and an air supply unit 6 to supply air to the laundry receiving unit so as to dry the laundry.

The cabinet 1 has an opening 11 for introduction/removal of laundry and a door 13 is coupled to the cabinet 1 to open or close the opening 11.

In a case in which the laundry treatment apparatus 100 of the present invention is designed to implement both washing and drying of laundry, the laundry receiving unit essentially includes a tub 2 placed inside the cabinet 1 to provide a water storage space and a drum 3 placed inside the tub 2 to provide a laundry receiving space and the air supply unit 6 needs to be configured to supply air to the tub 2.

The tub 2 may take the form of a cylinder having a tub opening 21 corresponding to the opening 11. The tub 2 is fixed inside the cabinet 1 via a tub support member 15.

A gasket 23 is interposed between the tub opening 21 and the opening 11 to prevent leakage of water stored in the tub 2 and to prevent transmission of vibration from the tub 2 to the cabinet 1.

The drum 3 may take the form of a cylinder having a drum opening 31 in communication with the tub opening 21. The drum is provided at the outer periphery thereof including the circumference thereof with through-holes 33 to communicate the inside of the drum 3 with the inside of the tub 2.

In a case in which the drum 3 is rotatably installed inside the tub 2, a rotating shaft 35 is installed to a rear surface of the drum 3 (opposite to a drum surface provided with the drum opening 31) so as to penetrate a rear surface of the tub 2.

A drive unit 4 is installed to a rear surface of the tub 2 to rotate the rotating shaft 35. The drive unit 4 may include a stator 41 secured to the rear surface of the tub 2, the stator 41 creating a rotation magnetic field upon receiving current from an external power source, and a rotor 43 configured to be rotated by the rotation magnetic field created by the stator 41, the rotating shaft 35 being coupled to the rotor 43.

Water required for washing of laundry is supplied to the tub 2 through a water supply unit (not illustrated) configured to interconnect the tub 2 and a water source (not illustrated). The water stored in the tub 2 is outwardly discharged from the cabinet 1 through a drain unit 5.

Meanwhile, in a case in which the laundry treatment apparatus 100 of the present invention includes a circulation drying system, the tub 2 further essentially includes an outlet port 25 and an inlet port 27 to communicate the inside of the tub 2 with the outside of the tub 2. The air supply unit 6 needs to be configured to dehumidify and heat air discharged from the outlet port 25 and to resupply the air to the tub 2 through the inlet port 27.

To this end, the air supply unit 6 includes a duct 61 connecting the outlet port 25 and the inlet port 27 to each other, a fan 63 located inside the duct 61 to circulate interior air of the tub 2, and a heat exchange module F located inside the duct 61 between the fan 63 and the inlet port 27 to sequentially implement dehumidification and heating of air moving in the duct 61.

On the other hand, in a case in which the laundry treatment apparatus 100 of the present invention includes an exhaust drying system, the above-described duct 61 needs to be divided into an exhaust duct (not illustrated) connected to the outlet port 25 and a supply duct (not illustrated) connected to the inlet port 27.

The exhaust duct (not illustrated) may be configured to communicate the inside of the tub 2 with the outside of the cabinet 1 and the supply duct (not illustrated) may be configured to communicate the inside of the tub 2 with the inside of the cabinet 1 or the outside of the cabinet 1. In this case, the fan 63 may be located inside the exhaust duct and the heat exchange module F may be located inside the supply duct.

Regardless of whether the laundry treatment apparatus 100 of the present invention includes a circulation drying system or an exhaust drying system, the heat exchange module F may include a first heat exchanger 67 to exchange heat with air supplied through the fan 63, a second heat exchanger 65 to exchange heat with air having passed through the first heat exchanger 67, and a heat transfer unit 69 located between the first heat exchanger 67 and the second heat exchanger 65.

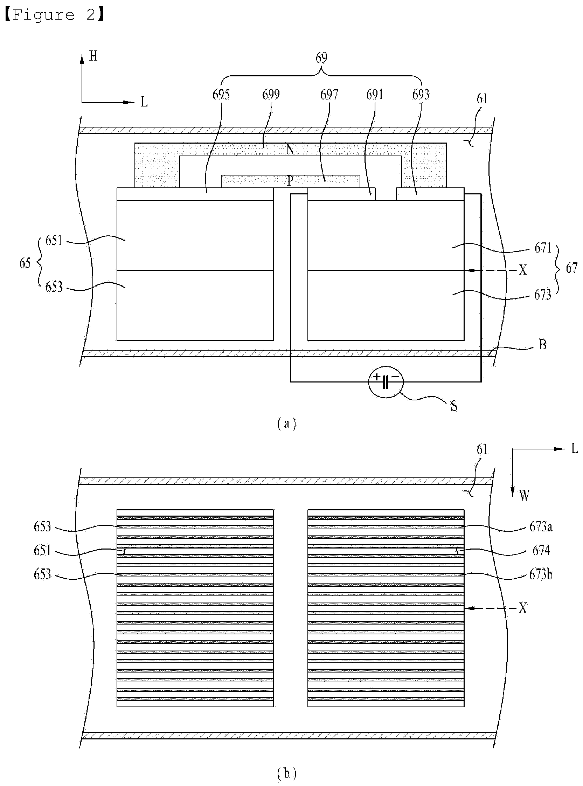

As exemplarily illustrated in FIG. 2, the heat transfer unit 69 according to the present invention may include a first conductor 691 coming into contact with the first heat exchanger 67, a second conductor 693 coming into contact with the first heat exchanger 67 and spaced apart from the first conductor 691 by a prescribed distance, a third conductor 695 coming into contact with the second heat exchanger 65, a P-type semiconductor 697 to interconnect the first conductor 691 and the third conductor 695, and an N-type semiconductor 699 to interconnect the second conductor 693 and the third conductor 695.

The P-type semiconductor 697 refers to a material in which the number of holes having positive charge (+ charge) is greater than the number of free electrons, and the N-type semiconductor 699 refers to a material in which the number of holes is less than the number of free electrons.

The first conductor 691 is connected to a positive electrode of a direct current (DC) power source S and the second conductor 693 is connected to a negative electrode of the DC power source S.

In the heat exchange module F having the above-described configuration, when the DC power source S supplies direct current to the first conductor 691 and the second conductor 693, the first conductor 691 and the second conductor 693 are cooled and the third conductor 695 is heated.

In this way, when the first heat exchanger 67 and the second heat exchanger 65 are formed of conductive materials, the first heat exchanger 67 secured to the first conductor 691 and the second conductor 693 functions as a heat absorber to absorb external heat and the second heat exchanger 65 secured to the third conductor 695 functions as a heat radiator to outwardly radiate heat.

Meanwhile, to allow the first heat exchanger 67 and the second heat exchanger 65 as described above to respectively implement dehumidification and heating of air introduced into the duct 61, the first heat exchanger 67 and the second heat exchanger 65 may be sequentially arranged in a direction from the fan 63 to the inlet port 27.

That is, air introduced into the duct 61 through the outlet 25 may be directed to the first heat exchanger 67 by way of the fan 63 and the air having passed through the first heat exchanger 67 may sequentially pass through the second heat exchanger 69 and the inlet port 27 so as to be resupplied to the tub 2.

To this end, the first heat exchanger 67 may include a heat absorption body 671 located inside the duct 61, the first conductor 691 and the second conductor 693 being secured to the heat absorption body 671, and heat absorption fins 673 protruding from the heat absorption body 671.

On the other hand, the second heat exchanger 65 may include a heat radiation body 651 located between the heat absorption body 671 and the inlet port 27, the third conductor 695 being secured to the heat radiation body 651, and heat radiation fins 653 protruding from the heat radiation body 651.

The heat absorption body 671, heat absorption fins 673, heat radiation body 651, and heat radiation fins 653 need to be formed of conductive materials and the heat absorption fins 673 and the heat radiation fins 653 may be arranged parallel to a movement direction X of air directed to the inlet port 27 as exemplarily illustrated in (b) of FIG. 2.

That is, the heat absorption fins 673 may be a plurality of plates (conductive plates) arranged at a lower surface of the heat absorption body 671 to extend in the longitudinal direction L of the duct 61 and spaced apart from one another by a prescribed distance in the width direction W of the duct 61. The heat radiation fins 653 may be a plurality of plates (conductive plates) arranged at a lower surface of the heat radiation body 651 to extend in the longitudinal direction L of the duct 61 and spaced apart from one another by a prescribed distance in the width direction W of the duct 61. This arrangement serves to minimize reduction in the flow rate of air when the air passes through the heat exchange module F.

While the heat absorption fins 673 and the heat radiation fins 653 may be positioned on the same lines as exemplarily illustrated in (b) of FIG. 2, each of the heat radiation fins 653 may be located in a space 674 between one heat absorption fin 673a and another heat absorption fin 673b, in order to enhance heat exchange efficiency.

Although not illustrated in FIG. 2, the first heat exchanger 67 may further include heat absorption fins protruding from the heat absorption body 671 to extend in the width direction W of the duct 61 and the second heat exchanger 65 may further include heat radiation fins protruding from the heat radiation body 651 to extend in the width direction W of the duct 61.

However, in consideration of the fact that moisture contained in air may be condensed at a surface of the first heat exchanger 67 while passing through the first heat exchanger 67, the heat absorption fins 673 may protrude from the heat absorption body 671 only to a lower surface B of the duct 61 (i.e. a lower surface on the basis of the cross section of the duct 61). In this case, the heat radiation fins 653 may include fins protruding from the heat radiation body 651 to the lower surface B of the duct 61 and fins protruding from the heat radiation body 651 to extend in the width direction W of the duct 61.

In the laundry treatment apparatus 100 having the above-described configuration, air introduced into the duct 61 by the fan 63 is dehumidified while passing through the first heat exchanger 67 and heated while passing through the second heat exchanger 65, thereby being directed to laundry inside the drum 3 through the inlet port 27 and the through-holes 33.

To discharge water, condensed while air passes through the first heat exchanger 67, from the duct 61, according to the present invention, the heat exchange module F may further include a sump (not illustrated) located below the first heat exchanger 67 to store the condensed water and a discharge pipe (not illustrated) to communicate the sump with the outside of the cabinet 1.

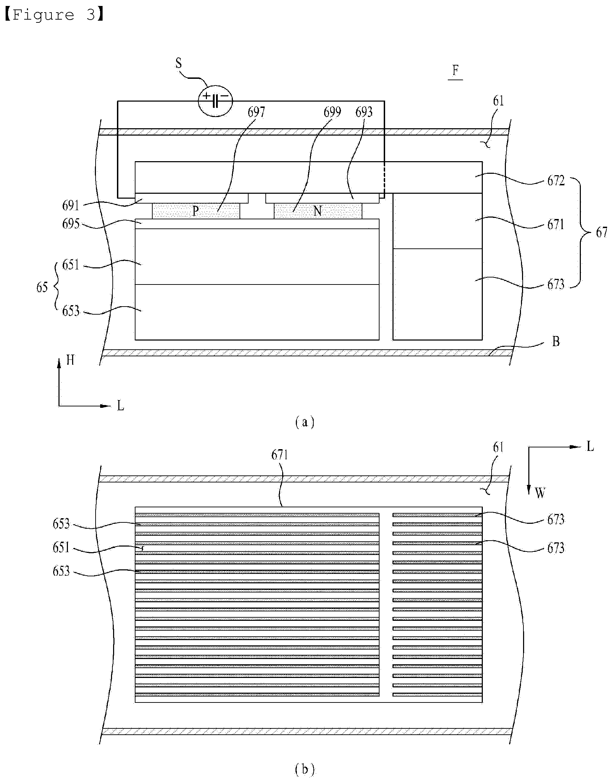

FIG. 3 illustrates another embodiment of the heat exchange module F included in the laundry treatment apparatus 100 according to the present invention.

While the heat exchange module F according to the present embodiment includes the first heat exchanger 67, second heat exchanger 65, and heat transfer unit 69 in the same manner as that of the embodiment of FIG. 2, positions of the first heat exchanger 67 and the second heat exchanger 69 differ from those in the embodiment of FIG. 2.

The second heat exchanger 65 according to the present embodiment may include the heat radiation body 651 secured to the third conductor 695 and the heat radiation fins 653 protruding from the heat radiation body 651 to the lower surface B of the duct 61.

Whereas, the first heat exchanger 67 according to the present embodiment includes the heat absorption body 671 located between the heat radiation body 651 and the fan 63, the heat absorption fins 673 protruding from the heat absorption body 671 to the lower surface B of the duct 61, and an extension body 672 extending from the heat absorption body 671 in the longitudinal direction L of the duct 61 so as to be located above the heat radiation body 651, the first conductor 691 and the second conductor 693 being secured to the extension body 672.

In the heat transfer unit 69 including the P-type semiconductor 697 and the N-type semiconductor 699, a theoretical amount of heat absorption is 160 assuming that the amount of heat absorption through the first heat exchanger 67 is 60 and the amount of electric power supplied from the DC power source S is 100.

Accordingly, since heat radiation through the second heat exchanger 65 may increase when heat absorption through the first heat exchanger 67 increases under application of a constant amount of electric power to the heat transfer unit 69, the extension body 672 of the first heat exchanger 67 serves to increase the amount of heat absorption through the first heat exchanger 67 and, consequently, increase heat radiation through the second heat exchanger 65.

Characteristics of the heat absorption fins 673 and the heat radiation fins 653 and characteristics of the heat transfer unit 69 are equal to those as in the above-described embodiment of FIG. 2 and a detailed description thereof will be omitted herein.

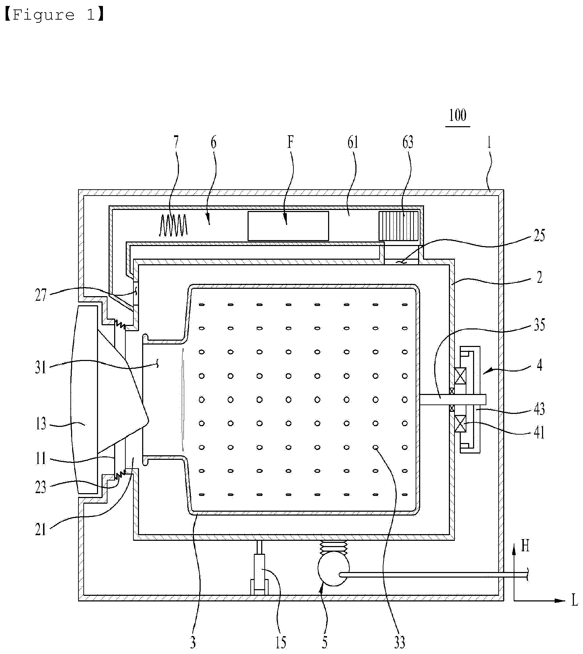

The above-described embodiments may further include a heater 7 (see FIG. 1) located between the inlet port 27 and the heat exchange module F to heat air having passed through the second heat exchanger 65 for the sake of rapid laundry drying.

The heater 7 is configured to heat air using Joule heating generated when current is supplied to, for example, a resistive wire.

While the above-described embodiments have been described based on a case in which the laundry treatment apparatus 100 is capable of washing and drying laundry, the above-described characteristics may be applied to a laundry treatment apparatus that performs only drying of laundry.

In the case of the laundry treatment apparatus that performs only drying of laundry, it is noted that a laundry receiving unit includes only the drum 3 placed inside the cabinet 1 and the air supply unit 6 is configured to supply air to the drum 3.

In addition, when the drum 3 needs to be rotatable inside the cabinet 1, the cabinet 1 additionally needs to internally incorporate a front support portion (not illustrated) to rotatably support the drum opening 31 and a rear support portion (not illustrated) spaced apart from the rear surface of the drum 3 by a prescribed distance to rotatably support the rotating shaft 35.

In this case, the front support portion may be provided with a support portion opening (not illustrated) in communication with the opening 11 of the cabinet 1, and the inlet port 27 and the outlet port 25 may be respectively formed in the front support portion and the rear support portion.

As is apparent from the above description, the present invention has the effect of providing a laundry treatment apparatus having high drying efficiency.

In addition, the present invention has the effect of providing a laundry treatment apparatus in which a device to remove moisture from air and a device to heat the air are integrated.

## Claims

1. A laundry treatment apparatus (100) comprising:
a laundry receiving unit (2, 3) configured to provide a space for receiving laundry and having an inlet port (27) and an outlet port (25);
a duct (61) connected to the outlet port (25) and the inlet port (27) so as to supply air to the laundry receiving unit (2, 3) through the inlet port (27) and to discharge air in the laundry receiving unit (2, 3) through the outlet port (26);
a fan (63) located inside the duct (61) to circulate interior air of the laundry receiving unit (2, 3);
a first heat exchanger (67) located inside the duct (61) configured to exchange heat with air introduced into the duct (61);
a second heat exchanger (65) located in the duct (61) and spaced apart from the first heat exchanger (67) in the longitudinal direction (L) of the duct (61) to exchange heat with air having passed through the first heat exchanger (67); and
a heat transfer unit (69) including a first conductor (691) coming into contact with the first heat exchanger (67) and connected to a positive electrode of a direct current (DC) power source (S), a second conductor (693) coming into contact with the first heat exchanger (67) and connected to a negative electrode of the DC power source (S), the second conductor (693) being separated from the first conductor (691), a third conductor (695) coming into contact with the second heat exchanger (65), a P-type semiconductor (697) configured to interconnect the first conductor (691) and the third conductor (695), and an N-type semiconductor (699) configured to interconnect the second conductor (693) and the third conductor (695), **characterized in that** the first heat exchanger (67) and the second heat exchanger (65) are sequentially arranged in straight line in the longitudinal direction (L) of the duct from the fan (63) to the inlet port (27).

2. The laundry treatment apparatus according to claim 1, wherein the duct (61) includes an exhaust duct configured to discharge the interior air of the laundry receiving unit (2, 3) to the outside of the laundry receiving unit (2, 3) and a supply duct to guide outside air to the laundry receiving unit (2, 3); and
the first heat exchanger (67), the second heat exchanger (65), and the heat transfer unit (69) are located inside the supply duct.

3. The laundry treatment apparatus according to claim 1, wherein the laundry receiving unit (2, 3) includes a tub (2) placed inside a cabinet (1) and having the inlet port (27) and the outlet port (25) in communication with the outside, and a drum (3) placed inside the tub (2) to provide the space for receiving laundry; and
the duct (61) is configured to connect the outlet port (25) and the inlet port (27) to each other.

4. The laundry treatment apparatus according to anyone of the claims 1 to 3, wherein the first heat exchanger (67) includes a heat absorption body (671) located inside the duct (61), the first conductor (691) and the second conductor (693) being secured to the heat absorption body (671), and heat absorption fins (673) protruding from the heat absorption body (671); and
the second heat exchanger (65) includes a heat radiation body (651) spaced apart from the first heat exchanger (67) in the longitudinal direction of the duct (61), the third conductor (695) being secured to the heat radiation body (651), and heat radiation fins (653) protruding from the heat radiation body (651).

5. The laundry treatment apparatus according to claim 4, wherein the heat absorption fins (673) and the heat radiation fins (653) are arranged parallel to a movement direction of air moving to the inlet port (27).

6. The laundry treatment apparatus according to claim 5, wherein the heat absorption fins (673) include a plurality of conductive plates spaced apart from one another by a prescribed distance in the width direction (W) of the duct (61); and
the heat radiation fins (653) include a plurality of conductive plates spaced apart from one another by another prescribed distance in the width direction (W) of the duct (61), one heat radiation fin (653) being located in a space (674) between one heat absorption fin (673a) and another heat absorption fin (673b), so as to be parallel to the heat absorption fins (673).

7. The laundry treatment apparatus according to claim 5, wherein the heat absorption fins (673) protrude from the heat absorption body toward a lower surface (B) of the cross section of the duct (61); and
the heat radiation fins (653) protrude from the heat radiation body (651) toward the lower surface (B) of the cross section of the duct (61).

8. The laundry treatment apparatus according to any one of the claims 1 to 3, wherein the first heat exchanger (67) includes a heat absorption body (671) located inside the duct (61), heat absorption fins (673) protruding from the heat absorption body (671) to a lower surface of the cross section of the duct (61), and an extension body (672) extending from the heat absorption body (671) in the longitudinal direction (L) of the duct (61), the first conductor (691) and the second conductor (693) being secured to the extension body (672); and
the second heat exchanger (65) includes a heat radiation body (651) located below the extension body (672), the third conductor (695) being secured to the heat radiation body (651), and heat radiation fins (653) protruding from the heat radiation body (651) toward the lower surface of the cross section of the duct (61).

9. The laundry treatment apparatus according to any one of claims 1 to 8, further comprising a heater (7) located inside the duct (61) to heat air having passed through the second heat exchanger (65).

## Patentansprüche

1. Wäschebehandlungsvorrichtung (100), die Folgendes umfasst:
eine Wäscheaufnahmeeinheit (2, 3), die konfiguriert ist, einen Raum zum Aufnehmen von Wäsche bereitzustellen, und die einen Einlassanschluss (27) und einen Auslassanschluss (25) aufweist;
eine Leitung (61), die mit dem Auslassanschluss (25) und dem Einlassanschluss (27) verbunden ist, um der Wäscheaufnahmeeinheit (2, 3) durch den Einlassanschluss (27) Luft zuzuführen und Luft in der Wäscheaufnahmeeinheit (2, 3) durch den Auslassanschluss (26) abzuführen;
ein Gebläse (63), das sich in der Leitung (61) befindet, um Innenluft der Wäscheaufnahmeeinheit (2, 3) in Zirkulation zu versetzen;
einen ersten Wärmetauscher (67), der sich in der Leitung (61) befindet und konfiguriert ist, Wärme mit Luft, die in die Leitung (61) eingeleitet wird, zu tauschen;
einen zweiten Wärmetauscher (65), der sich in der Leitung (61) befindet und von dem ersten Wärmetauscher (67) in der Längsrichtung (L) der Leitung (61) beabstandet ist, um Wärme mit Luft zu tauschen, die durch den ersten Wärmetauscher (67) gelangt ist; und
eine Wärmeübertragungseinheit (69), die einen ersten Leiter (691) umfasst, der mit dem ersten Wärmetauscher (67) in Kontakt kommt und mit einer positiven Elektrode einer Gleichstrom-Leistungsquelle (DC-Leistungsquelle) (S) verbunden ist,
einen zweiten Leiter (693), der mit dem ersten Wärmetauscher (67) in Kontakt kommt und mit einer negativen Elektrode der DC-Leistungsquelle (S) verbunden ist, wobei der zweite Leiter (693) von dem ersten Leiter (691) getrennt ist, einen dritten Leiter (695), der mit dem zweiten Wärmetauscher (65) in Kontakt kommt, einen Halbleiter (697) vom p-Typ, der konfiguriert ist, den ersten Leiter (691) und den dritten Leiter (695) miteinander zu verbinden, und einen Halbleiter (699) vom n-Typ, der konfiguriert ist, den zweiten Leiter (693) und den dritten Leiter (695) miteinander zu verbinden,
**dadurch gekennzeichnet, dass**
der erste Wärmetauscher (67) und der zweite Wärmetauscher (65) der Reihe nach in einer geraden Linie in der Längsrichtung (L) der Leitung von dem Gebläse (63) zu dem Einlassanschluss (27) angeordnet sind.

2. Wäschebehandlungsvorrichtung nach Anspruch 1, wobei die Leitung (61) eine Abluftleitung, die konfiguriert ist, die Innenluft der Wäscheaufnahmeeinheit (2, 3) zu der Außenseite der Wäscheaufnahmeeinheit (2, 3) abzuführen, und eine Zufuhrleitung, um Außenluft zu der Wäscheaufnahmeeinheit (2, 3) zu leiten, umfasst; und
der erste Wärmetauscher (67), der zweite Wärmetauscher (65) und die Wärmeübertragungseinheit (69) in der Zufuhrleitung angeordnet sind.

3. Wäschebehandlungsvorrichtung nach Anspruch 1, wobei die Wäscheaufnahmeeinheit (2, 3) einen Bottich (2), der in einem Gehäuse (1) angeordnet ist und bei dem der Einlassanschluss (27) und der Auslassanschluss (25) mit der Außenseite in Kommunikation sind, und eine Trommel (3), die in dem Bottich (2) angeordnet ist, um den Raum zum Aufnehmen von Wäsche bereitzustellen, umfasst; und
die Leitung (61) konfiguriert ist, den Auslassanschluss (25) und den Einlassanschluss (27) miteinander zu verbinden.

4. Wäschebehandlungsvorrichtung nach einem der Ansprüche 1 bis 3, wobei der erste Wärmetauscher (67) einen Wärmeabsorptionskörper (671), der sich in der Leitung (61) befindet, wobei der erste Leiter (691) und der zweite Leiter (693) an dem Wärmeabsorptionskörper (671) befestigt sind, und Wärmeabsorptionslamellen (673), die von dem Wärmeabsorptionskörper (671) vorstehen, umfasst; und
der zweite Wärmetauscher (65) einen Wärmestrahlungskörper (651), der von dem ersten Wärmetauscher (67) in der Längsrichtung der Leitung (61) beabstandet ist, wobei der dritte Leiter (695)) an dem Wärmestrahlungskörper (651) befestigt ist, und Wärmestrahlungslamellen (653), die von dem Wärmestrahlungskörper (651) vorstehen, umfasst.

5. Wäschebehandlungsvorrichtung nach Anspruch 4, wobei die Wärmeabsorptionslamellen (673) und die Wärmestrahlungslamellen (653) parallel zu einer Bewegungsrichtung von Luft, die sich zu dem Einlassanschluss (27) bewegt, angeordnet sind.

6. Wäschebehandlungsvorrichtung nach Anspruch 5, wobei die Wärmeabsorptionslamellen (673) mehrere leitfähige Platten umfassen, die mit einem vorgeschriebenen Abstand in der Breitenrichtung (W) der Leitung (61) voneinander beabstandet sind; und
die Wärmestrahlungslamellen (653) mehrere leitfähige Platten umfassen, die mit einem anderen vorgeschriebenen Abstand in der Breitenrichtung (W) der Leitung (61) voneinander beabstandet sind, wobei sich eine Wärmestrahlungslamelle (653) in einem Zwischenraum (674) zwischen einer Wärmeabsorptionslamelle (673a) und einer weiteren Wärmeabsorptionslamelle (673b) befindet, so dass sie parallel zu den Wärmeabsorptionslamellen (673) verläuft.

7. Wäschebehandlungsvorrichtung nach Anspruch 5, wobei die Wärmeabsorptionslamellen (673) von dem Wärmeabsorptionskörper in Richtung einer unteren Oberfläche (B) des Querschnitts der Leitung (61) vorstehen; und
die Wärmestrahlungslamellen (653) von dem Wärmestrahlungskörper (651) in Richtung der unteren Oberfläche (B) des Querschnitts der Leitung (61) vorstehen.

8. Wäschebehandlungsvorrichtung nach einem der Ansprüche 1 bis 3, wobei der erste Wärmetauscher (67) einen Wärmeabsorptionskörper (671), der sich in der Leitung (61) befindet, wobei Wärmeabsorptionslamellen (673) von dem Wärmeabsorptionskörper (671) in Richtung einer unteren Oberfläche des Querschnitts der Leitung (61) vorstehen, und einen Erweiterungskörper (672), der sich von dem Wärmeabsorptionskörper (671) in der Längsrichtung (L) der Leitung (61) erstreckt, umfasst, wobei der erste Leiter (691) und der zweite Leiter (693) an dem Erweiterungskörper (672) befestigt sind, und
der zweite Wärmetauscher (65) einen Wärmestrahlungskörper (651), der sich unter dem Erweiterungskörper (672) befindet, wobei der dritte Leiter (695) an dem Wärmestrahlungskörper (651) befestigt ist, und Wärmestrahlungslamellen (653), die von dem Wärmestrahlungskörper (651) in Richtung der unteren Oberfläche des Querschnitts der Leitung (61) vorstehen, umfasst.

9. Wäschebehandlungsvorrichtung nach einem der Ansprüche 1 bis 8, die ferner ein Heizelement (7) umfasst, das sich in der Leitung (61) befindet, um Luft zu erwärmen, die durch den zweiten Wärmetauscher (65) gelangt ist.

## Revendications

1. Appareil de traitement de linge (100) comprenant :
une unité de réception de linge (2, 3) configurée pour fournir un espace afin de recevoir du linge et ayant un orifice d'entrée (27) et un orifice de sortie (25) ;
un conduit (61) connecté à l'orifice de sortie (25) et à l'orifice d'entrée (27) de manière à fournir de l'air à l'unité de réception de linge (2, 3) à travers l'orifice d'entrée (27) et à décharger l'air dans l'unité de réception de linge (2, 3) à travers l'orifice de sortie (26) ;
un ventilateur (63) situé à l'intérieur du conduit (61) pour faire circuler l'intérieur de l'unité de réception de linge (2, 3) ;
un premier échangeur de chaleur (67) situé à l'intérieur du conduit (61), configuré pour échanger de la chaleur avec l'air introduit dans le conduit (61);
un second échangeur de chaleur (65) situé dans le conduit (61) et espacé du premier échangeur de chaleur (67) dans la direction longitudinale (L) du conduit (61) pour échanger de la chaleur avec l'air qui est passé à travers le premier échangeur de chaleur (67) ; et
une unité de transfert de chaleur (69) incluant un premier conducteur (691) qui vient en contact avec le premier échangeur de chaleur (67) et qui est connecté à une électrode positive d'une source de puissance à courant continu (S), un second conducteur (693) qui vient en contact avec le premier échangeur de chaleur (67) et qui est connecté à une électrode négative de la source de puissance à courant continu (S), le second conducteur (693) étant séparé vis-à-vis du premier conducteur (691), un troisième conducteur (695) qui vient en contact avec le second échangeur de chaleur (65), un semi-conducteur de type P (697), configuré pour interconnecter le premier conducteur (691) et le troisième conducteur (695), et un semi-conducteur de type N (699) configuré pour interconnecter le second conducteur (693) et le troisième conducteur (695),
**caractérisé en ce que**
le premier échangeur de chaleur (67) et le second échangeur de chaleur (65) sont agencés séquentiellement en ligne droite dans la direction longitudinale (L) du conduit depuis le ventilateur (63) vers l'orifice d'entrée (27).

2. Appareil de traitement de linge selon la revendication 1, dans lequel le conduit (61) inclut un conduit d'échappement configuré pour décharger l'air intérieur de l'unité de réception de linge (2, 3) vers l'extérieur de l'unité de réception de linge (2, 3) et un conduit d'alimentation pour guider l'air extérieur vers l'unité de réception de linge (2, 3) ; et
le premier échangeur de chaleur (67), le second échangeur de chaleur (65), et l'unité de transfert de chaleur (69) sont situés à l'intérieur du conduit d'alimentation.

3. Appareil de traitement de linge selon la revendication, dans lequel l'unité de réception de linge (2, 3) inclut une cuve (2) placé à l'intérieur d'une carrosserie (1) et ayant l'orifice d'entrée (27) et l'orifice de sortie (25) en communication avec l'extérieur, et un tambour (3) placé à l'intérieur de la cuve (2) pour constituer l'espace pour recevoir du linge ; et
le conduit (61) est configuré pour connecter l'orifice de sortie (25) et l'orifice d'entrée (27) l'un à l'autre.

4. Appareil de traitement de linge selon l'une quelconque des revendications 1 à 3, dans lequel le premier échangeur de chaleur (67) inclut un corps d'absorption de chaleur (671) situé à l'intérieur du conduit (61), le premier conducteur (691) et le second conducteur (693) étant fixés sur le corps d'absorption de chaleur (671), et des ailettes d'absorption de chaleur (673) qui se projettent depuis le corps d'absorption de chaleur (671) ; et
le second échangeur de chaleur (65) inclut un corps de rayonnement de chaleur (651) espacé du premier échangeur de chaleur (67) dans la direction longitudinale du conduit (61), le troisième conducteur (695) étant fixé sur le corps de rayonnement de chaleur (651), et des ailettes de rayonnement de chaleur (653) qui se projettent depuis le corps de rayonnement de chaleur (651).

5. Appareil de traitement de linge selon la revendication 4, dans lequel les ailettes d'absorption de chaleur (673) et les ailettes de rayonnement de chaleur (653) sont agencées parallèles à une direction de déplacement de l'air qui se déplace vers l'orifice d'entrée (27).

6. Appareil de traitement de linge selon la revendication 5, dans lequel les ailettes d'absorption de chaleur (673) incluent une pluralité de plaques conductrices espacées les unes des autres d'une distance prescrite dans la direction en largeur (W) du conduit (61) ; et
les ailettes de rayonnement de chaleur (653) incluent une pluralité de plaques conductrices espacées les unes des autres d'une autre distance prescrite dans la direction en largeur (W) du conduit (61), une ailette de rayonnement de chaleur (653) étant située dans un espace (674) entre une ailette d'absorption de chaleur (673a) et une autre ailette d'absorption de chaleur (673b), de manière à être parallèle aux ailettes d'absorption de chaleur (673).

7. Appareil de traitement de linge selon la revendication 5, dans lequel les ailettes d'absorption de chaleur (673) se projettent depuis le corps d'absorption de chaleur vers une surface inférieure (B) de la section transversale du conduit (61) ; et
les ailettes de rayonnement de chaleur (653) se projettent depuis le corps de rayonnement de chaleur (651) vers la surface inférieure (B) de la section transversale du conduit (61).

8. Appareil de traitement de linge selon l'une quelconque des revendications 1 à 3, dans lequel le premier échangeur de chaleur (67) inclut un corps d'absorption de chaleur (671) situé à l'intérieur du conduit (61), des ailettes d'absorption de chaleur (673) qui se projettent depuis le corps d'absorption de chaleur (671) vers une surface inférieure de la section transversale du conduit (61), et un corps d'extension (672) qui s'étend depuis le corps d'absorption de chaleur (671) dans la direction longitudinale (L) du conduit (61), le premier conducteur (691) et le second conducteur (693) étant fixés sur le corps d'extension (672) ; et
le second échangeur de chaleur (65) inclut un corps de rayonnement de chaleur (651) situé au-dessous du corps d'extension (672), le troisième conducteur (695) étant fixé au corps de rayonnement de chaleur (651), et des ailettes de rayonnement de chaleur (653) qui se projettent depuis le corps de rayonnement de chaleur (651) vers la surface inférieure de la section transversale du conduit (61).

9. Appareil de traitement de linge selon l'une quelconque des revendications 1 à 8, comprenant en outre un dispositif chauffant (7) situé à l'intérieur du conduit (61) pour chauffer l'air qui est passé à travers le second échangeur de chaleur (65).
